# EUROPÄISCHE PATENTSCHRIFT

(11) **EP 0 893 299 B1**
(45) Veröffentlichungstag und Bekanntmachung des Hinweises auf die Patenterteilung: **16.10.2002**
(21) Anmeldenummer: 98113001.6
(22) Anmeldetag: 13.07.1998
(51) Int. Cl.: B60M 1/20

(54) **Oberleitungsanlage mit Kettenwerk-Tragkonstruktion**
Overhead electrification installation with catenary support construction
Installation électrique aérienne avec construction de support du caténaire

(30) Priorität: 24.07.1997 DE 19731981; 13.05.1998 DE 29808633 U
(43) Veröffentlichungstag der Anmeldung: 27.01.1999
(73) Patentinhaber: SIEMENS AKTIENGESELLSCHAFT, 80333 München (DE)
(72) Erfinder: Brodkorb, Albrecht,Dr., 91353 Hausen (DE)

(56) Entgegenhaltungen:
- EP-A- 0 406 840
- GB-A- 2 151 572
- PATENT ABSTRACTS OF JAPAN vol. 6, no. 134 (M-144), 21. Juli 1982 & JP 57 058521 A (SANWA TEKKI CORP), 8. April 1982

## Beschreibung

Die Erfindung betrifft eine Oberleitungsanlage mit Kettenwerk-Tragkonstruktion entsprechend dem Oberbegriff des Patentanspruchs 1.

Eine derartige Oberleitungsanlage ist z. B. in der CH 358110 beschrieben und umfaßt wenigstens eine Tragkonstruktion für mindestens ein Kettenwerk, wobei das Kettenwerk wenigstens einen im wesentlichen längs der Fahrtrichtung verlaufenden Fahrdraht aufweist. Der Fahrdraht führt dem Fahrzeug die benötigte Energie zu und wird von wenigstens einer quer zum Fahrdraht angeordneten Schleifleiste eines Stromabnehmers beschliffen. Die bei Oberleitungsanlagen für Geschwindigkeiten über 100 km/h meist vorhandenen Tragseile haben eine Tragfunktion und dienen auch zur Stromzuführung. Moderne Oberleitungsanlagen, die hohe Geschwindigkeiten ermöglichen, nutzen zur Stromzuführung zusätzlich zum Fahrdraht und zum Tragseil weitere Leitungen, z. B. Verstärkungsleitungen.

Zu diesem Zweck sind stromtragfähige Verbindungen zwischen Fahrdraht, Tragseil und weiteren Leitungen notwendig. Für diese Verbindungen sind im wesentlichen zwei Lösungen bekannt. Zum einen werden Stromverbinder als Bauteile zur Stromführung zwischen Fahrdraht, Tragseil und/oder Verstärkungsleitungen eingesetzt. Diese stellen sehr große Massen dar, die das Kontaktverhalten zwischen Stromabnehmer und Fahrdraht negativ beeinflussen. Dies führt in der Regel zu erhöhtem Verschleiß am Fahrdraht und/oder an den Schleifleisten der Stromabnehmer. Eine zweite, heute gebräuchliche Möglichkeit ist die Nutzung der Hänger, welche den Fahrdraht am Tragseil halten, zur Stromübertragung. Um die Masseanhäufung mit den bekannten Nachteilen zu vermeiden, müssen die Hänger einen entsprechend geringen Querschnitt aufweisen. Um die notwendige elektrische Festigkeit in der Oberleitung zu erreichen, müssen die Hänger relativ lang ausgeführt sein. Darüber hinaus müssen dazu in der Regel alle oder zumindest sehr viele Hänger im Kettenwerk stromfest ausgeführt werden. Diese Verbindungen sind relativ kompliziert und für hohe Ströme, z. B. bei Gleichstrombahnen, auch nur bedingt geeignet.

Eine Oberleitungsanlage anderer Gattung ist aus CH 15711 bekannt. Bei dieser Oberleitungsanlage sind in passenden Abständen quer über dem Bahnkörper Kontaktdrähte gespannt. Diese Querkontaktdrähte sind isoliert zwischen zu beiden Seiten des Gleises angeordneten Masten gespannt. Der Abstand der Querkontaktdrähte zueinander ist hierbei so gewählt, daß ein Längskontakt, welcher federnd auf dem Dach eines Wagens angeordnet ist, immer mit je einem Querkontaktdraht in Verbindung steht, bzw. beim Übergang von einem Querkontaktdraht zum anderen in der Mittelstellung beide Querkontaktdrähte berührt, damit die Stromzuführung keine Unterbrechung erleidet.

Aufgabe der vorliegenden Erfindung ist es, eine Oberleitungsanlage der eingangs genannten Art zu schaffen, die einfacher ausführbar ist und die ein Befahren des Gleises mit höheren Geschwindigkeiten zuläßt, wobei Kontaktkraftspitzen und Lichtbogenbildung vermindert werden sollen.

Die Aufgabe wird erfindungsgemäß durch das kennzeichnende Merkmal des Anspruchs 1 gelöst. Vorteilhafte Ausgestaltungen der Erfindung sind in den weiteren Ansprüchen beschrieben.

Bei der erfindungsgemäßen Oberleitungsanlage werden Betriebsströme und Kurzschlußströme über die Tragkonstruktion geführt. Die Tragkonstruktion wird also nicht nur zum Tragen des Kettenwerks sondern auch zur elektrisch leitenden Verbindung zwischen Versorgungsleitung und Fahrdraht benutzt. Zu den Betriebsströmen zählen hierbei auch die Rückspeiseströme.

Durch die erfindungsgemäß vorgeschlagenen Maßnahmen können die Abstände zwischen Fahrdraht und Tragseil verringert werden, da die Hänger nur isoliert ausgeführt werden müssen und damit nur noch entsprechend der auftretenden mechanischen Belastung zu dimensionieren sind.

Durch die stromfeste Ausführung der Tragkonstruktion, die in der Regel in Abständen zwischen 50 und 100 Metern über Auslegerkonstruktionen das Kettenwerk trägt, sind keine weiteren elektrischen Verbindungen notwendig. Aufgrund der Massenreduzierung bei den schwingungsfähigen Bauteilen der erfindungsgemäßen Oberleitungsanlage ergibt sich beim Fahrdraht eine verbesserte Befahrungsgüte, wodurch diese Oberleitungen für hohe Leistungen oder/und für hohe Geschwindigkeiten besser geeignet sind.

An der Tragkonstruktion wird der Fahrdraht in der Regel durch eine Fahrdrahtklemme geführt, die mechanisch beaufschlagt ist. Die eingesetzte Verbindung ist jedoch nicht ohne weiteres zur Stromübertragung geeignet, da sie ein Drehgelenk darstellt. Falls aus Kostengründen die Gelenke selbst nicht stromführend ausgeführt, können die Gelenke durch elektrische Leiter überbrückt werden.

Die Tragkonstruktion des Auslegers besteht vorteilhafterweise aus Metallteilen, wobei die notwendigen Gelenke in den Drehachsen elektrisch leitend so überbrückt werden, daß über diese Konstruktion der Betriebs- und Kurschlußstrom übertragen werden kann.

Wenn davon ausgegangen wird, daß die Tragkonstruktion selbst für die Übertragung der Betriebs- und Kurzschlußströme nicht genutzt werden kann, was z. B. bei isolierter Ausführung der Gestänge im Fachwerk des Auslegers der Fall ist, können mit Vorteil an der Tragkonstruktion elektrisch leitfähige Bauteile zur Verbindung elektrischer Leiter angeordnet sein.

Weiter Vorteile und Einzelheiten der Erfindung ergeben sich aus der nachfolgenden Beschreibung eines Ausführungsbeispiels einer Oberleitungsanlage mit Kettenwerk-Tragkonstruktion sowie der Beschreibung mehrerer Ausführungsformen einer stromfesten Verbindung der Tragteile einer Kettenwerk-Tragkonstruktion untereinander sowie einer stromfesten Verbindung zwischen Fahrdraht und Tragteil anhand der Zeichnung und in Verbindung mit den weiteren Ansprüchen.
Es zeigen:
FIG 1 eine Oberleitungsanlage gemäß dem Stand der Technik,
FIG 2 eine Oberleitungsanlage gemäß der Erfindung,
FIG 3 bis FIG 7 mehrere Ausführungsbeispiele einer stromfesten Verbindung zwischen einer Fahrdrahtklemme und einem Tragteil einer Kettenwerk-Tragkonstruktion.

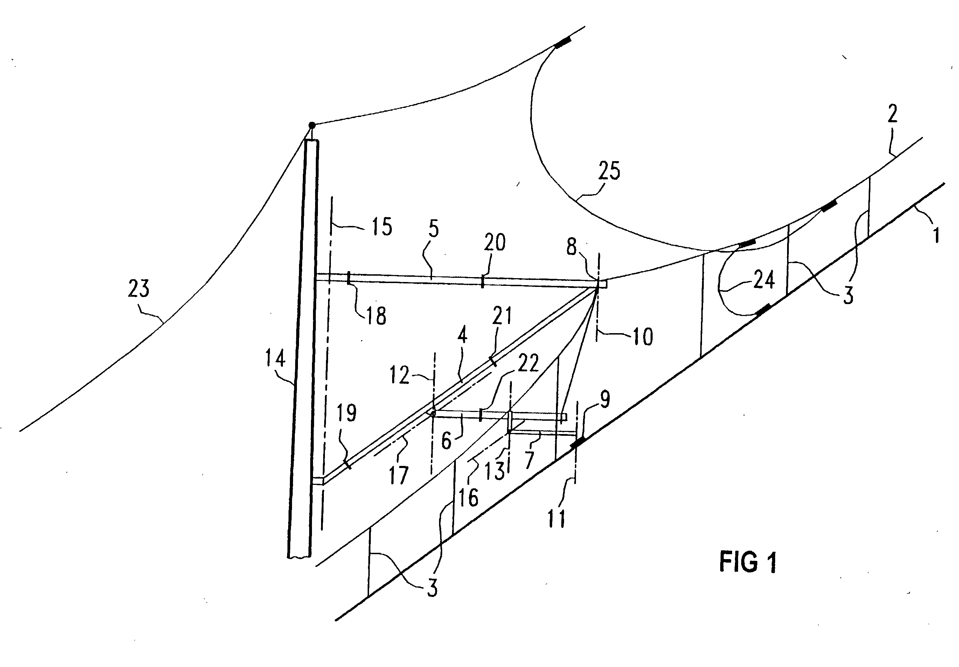

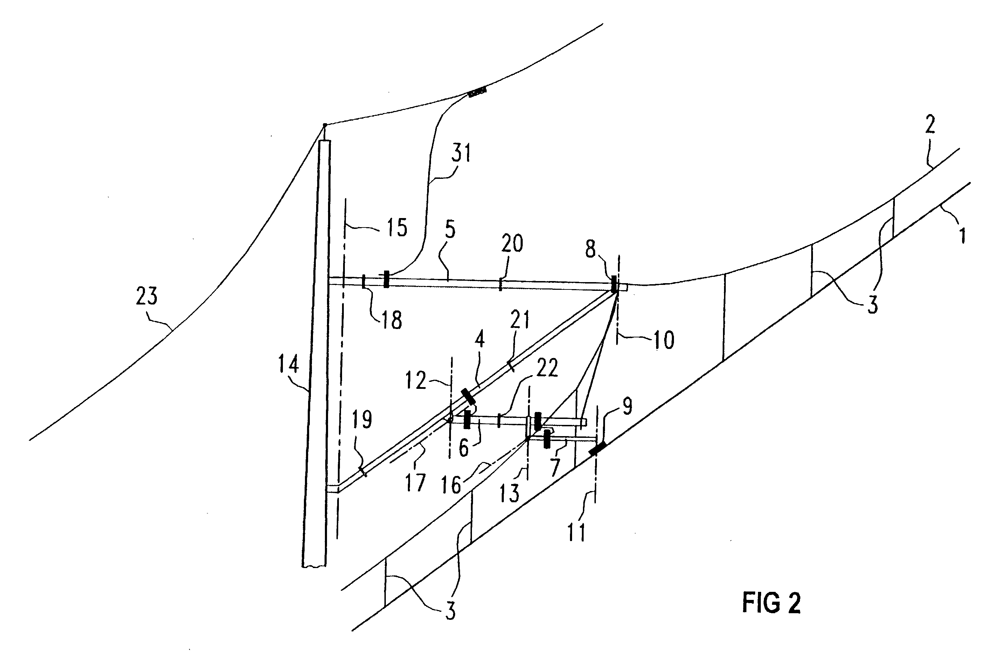

Die in FIG 1 und 2 dargestellte Oberleitungsanlage umfaßt einen Fahrdraht 1, ein Tragseil 2 und eine Vielzahl von Hängern 3, wobei der Fahrdraht 1 mittels der Hänger 3 am Tragseil 2 aufgehängt ist. Dieses Kettenwerk ist durch eine Tragkonstruktion an einem Mast befestigt. Diese Tragkonstruktion in FIG 1 und 2 am Beispiel eines Rohrschwenkauslegers dargestellt, besteht aus einer Fachwerkkonstruktion aus Rohren. Wesentliche Elemente der Tragkonstruktion sind ein Auslegerrohr 4 mit einem Spitzenrohr 5 und einem Stützrohr 6 sowie einem Seitenhalter 7. Das Kettenwerk wird durch Aufhängung des Tragseils 2 an diesem Auslegerrohr 4 in einem Tragseilaufhängerpunkt 8 getragen. Der Fahrdraht 1 selbst wird durch die Hänger 3 am Tragseil 2 gehalten. Er wird in seiner horizontalen Lage durch Aufhängung am Seitenhalter 7 durch eine Fahrdrahtklemme 9 geführt.

Um die Funktion dieser Vorrichtung für alle Betriebsfälle zu sichern, ist die Tragkonstruktion in verschieden Achsen gelenkig ausgeführt. Horizontale Bewegungen sind möglich, um ein vertikale Achse 10 am Tragseilaufhängerpunkt 8, um eine vertikale Achse 11 an der Fahrdrahtklemme 9, um eine vertikale Achse 12 am Stützrohr 6 sowie um eine vertikale Achse 13 an der Aufhängung des Seitenhalters 7. Weiterhin ist eine horizontale Bewegung der Tragkonstruktion an ihrer Befestigung an einem Bauwerk, z. B. einem Mast 14, um eine vertikale Achse 15 möglich. Durch diese Konstruktion wird sichergestellt, daß der Fahrdraht 1 und das Tragseil 2, welche sich durch Umwelteinflüsse bzw. durch Stromfluß erwärmen und sich dadurch ausdehnen, parallel zum Gleis wandern können, wobei diese Wanderbewegungen nicht im gleichen Maße verlaufen müssen. Bei Durchfahrt eines Stromabnehmers wird der Fahrdraht 1 in vertikaler Richtung an der Fahrdrahtklemme 9 angehoben. Dementsprechend sind Rotationsbewegungen um horizontale Achsen 16 und 17 parallel zum Fahrdraht 1 möglich.

Bei der Regelausführung derartiger Ausleger besteht die Tragkonstruktion im allgemeinen aus elektrisch leitenden Metallteilen, in FIG 1 aus dem Auslegerrohr 4, dem Spitzenrohr 5 und dem Stützrohr 6. Die Isolation erfolgt entweder durch ein Isolationsteil 18 im Spitzenrohr 5 und durch ein Isolationsteil 19 im Auslegerrohr 4. Bei speziellen Ausführungsformen erfolgt die Isolation durch ein Isolationsteil 20 im Spitzenrohr 5, durch ein Isolationsteil 21 im Auslegerrohr 4 und durch ein Isolationsteil 22 im Stützrohr 6.

Für hochbelastete Anlagen ist es möglich, daß zusätzlich zu Fahrdraht 1 und Tragseil 2 im Kettenwerk weitere Leiter parallel verlegt werden, die ebenfalls der Stromführung dienen. In FIG 1 und 2 ist dies die Verstärkungsleitung 23.

Bei einer bekannten, in FIG 1 gezeigten Lösung erfolgt die elektrische Verbindung dadurch, daß in das Kettenwerk der Oberleitungsanlage elektrische Verbindungsleitungen 24, die eine hohe Leitfähigkeit aufweisen, eingebaut werden. Die Verbindungsleitung 24 stellt eine elektrisch leitende Verbindung zwischen dem Tragseil 2 und dem Fahrdraht 1 her. Die Verstärkungsleitung 23 ist über eine zusätzliche Verbindungsleitung 25 mit dem Tragseil 2 elektrisch leitend verbunden. Um die Verbindungsleitungen 24 und 25 betriebsstromfest und kurzschlußstromfest auszuführen sind entsprechend große Leiterquerschnitte notwendig. Die Verbindungsleitungen 24 und 25 sowie ihre Anschlußbauteile sind mit relativ großen Massen behaftet, welche im Kettenwerk das Zusammenwirken des Fahrdrahtes 1 mit dem Stromabnehmer negativ beeinflussen.

Eine weitere bekannte, ebenfalls in FIG 1 dargestellte Lösung besteht darin, die Verbindungsleitung 24, die das Zusammenwirken des Fahrdrahtes 1 mit dem Stromabnehmer beeinflußt, durch eine stromfeste Ausführung der Hänger 3 zu ersetzten. Hierzu wird ein speziell konstruierter Hänger 3 eingesetzt, welcher ebenfalls Betriebsströme und Kurschlußströme übertragen kann. Dabei ist es jedoch nicht möglich, die kompletten Betriebsströme und Kurzchlußströme über einzelne Hänger 3 zu übertragen. Vielmehr ist es notwendig, eine Vielzahl der Hänger 3 stromfest auszuführen.

Beide bekannten Lösungen beinhalten verschiedene Nachteile. Der Einsatz von Verbindungsleitungen 24 beeinflußt das Zusammenwirken Oberleitung/Stromabnehmer in diesem Bereich. Die Anhäufung einer großen Masse führt insbesondere bei einer höheren Geschwindigkeiten zu einem verstärkten Verschleiß am Fahrdraht 1 an diesen Punkten. Die Verbindungsleitung 24 ist aufwendig, da sie nicht nur den Abstand zwischen Fahrdraht 1 und Tragseil 2 überbrücken, sondern auch flexibel reagieren muß, wenn der Fahrdraht 1 an diesen Punkt bei Durchfahrt eines Stromabnehmers angehoben wird. Die Verbindungsleitung 25 muß eine relativ große Entfernung überbrücken und erfordert damit eine entsprechend aufwendige Anordnung.

Die bekannte Lösung mit Ersatz der Verbindungsleitung 24 durch eine stromfeste Ausführung der Hänger 3 erfordert eine aufwendigere Gestaltung der Hänger 3. Diese Lösung schränkt die Gestaltungsmöglichkeiten bei der Entwicklung von Kettenwerken ein, da durch den begrenzten Querschnitt der Hänger 3, die möglichst geringe Massen aufweisen sollen, diese eine Mindestlänge benötigen, die von der Speiseleistung im Fehlerfall abhängt. Die Hänger 3 sind durch die notwendige flexible Gestaltung der Anschlüsse störanfällig.

Bei der in FIG 2 gezeigten Ausführungsform der erfindungsgemäßen Oberleitungsanlage werden die Betriebsströme und die Kurzschlußströme über die Tragkonstruktion geführt.

Die Tragkonstruktion umfaßt im dargestellten Ausführungsbeispiel ein Auslegerrohr 4, ein Spitzenrohr 5 und ein Stützrohr 6 sowie einen Seitenhalter 7. Das Kettenwerk wird durch Aufhängung des Tragseils 2 an diesem Auslegerrohr 4 in einem Tragseilaufhängerpunkt 8 getragen. Der Fahrdraht 1 selbst wird durch die Hänger 3 am Tragseil 2 gehalten. Er wird in seiner horizontalen Lage durch Aufhängung am Seitenhalter 7 durch eine Fahrdrahtklemme 9 geführt. Um die Funktion dieser Vorrichtung für alle Betriebsfälle zu sichern, ist die Tragkonstruktion, entsprechend der Tragkonstruktion der Oberleitungsanlage gemäß FIG 1, in verschiedenen Achsen gelenkig ausgeführt.

Bei der erfindungsgemäßen Oberleitungsanlage werden Betriebsströme und Kurzschlußströme über die Tragkonstruktion geführt. Im dargestellten Ausführungsbeispiel ist hierzu das Spitzenrohr 5 über eine Verbindungsleitung 31 elektrisch leitend mit der Versorgungsleitung 23 verbunden. Die Tragkonstruktion wird also nicht nur zum Tragen des Kettenwerks sondern auch zur elektrisch leitenden Verbindung zwischen der Versorgungsleitung 23 und dem Fahrdraht 1 benutzt. Die Abstände zwischen dem Fahrdraht 1 und dem Tragseil 2 können verringert werden, da die Hänger 3 nur isoliert ausgeführt werden müssen und damit nur noch entsprechend der auftretenden mechanischen Belastung zu dimensionieren sind.

Durch die stromfeste Ausführung der Tragkonstruktion, die in der Regel in Abständen zwischen 50 und 100 Metern über Auslegerkonstruktionen das Kettenwerk trägt, sind keine weiteren elektrischen Verbindungen notwendig. Aufgrund der Massenreduzierung bei den schwingungsfähigen Bauteilen der erfindungsgemäßen Oberleitungsanlage ergibt sich beim Fahrdraht 1 eine verbesserte Befahrungsgüte, wodurch diese Oberleitungen für hohe Leistungen oder/und für hohe Geschwindigkeiten besser geeignet sind.

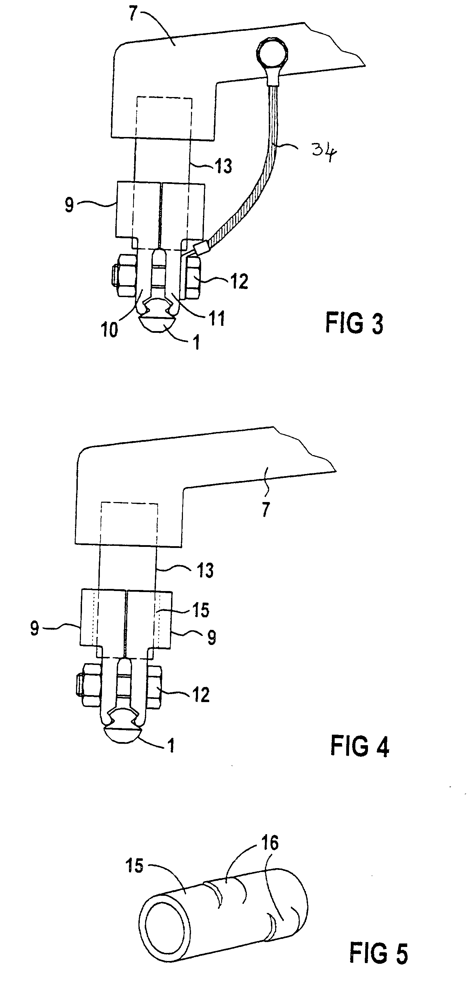

Die Figuren 3 bis 7 zeigen mehrere Ausführungsbeispiele einer stromfesten Verbindung zwischen einer Fahrdrahtklemme und einem Tragteil der Kettenwerk-Tragkonstruktion sowie einer stromfesten Ausführung eines Drehgelenks zwischen Fahrdrahtklemme und einem Tragteil.

Die Figur 3 zeigt den Anschluß der Fahrdrahtklemme 9 am Seitenhalter 7. Die Fahrdrahtklemme 9 ist in bekannter Weise mehrteilig ausgeführt und besteht im wesentlichen aus zwei halbschalenartigen Klemmkörpern 10, 11, die durch eine Schraubverbindung 12 einerseits den Fahrdraht 1 aufnehmen und andererseits einen fest im Seitenhalter 7 angeordneten Bolzen 13 drehbar aufnehmen. Die komplett montierte Fahrdrahtklemme 9 ist also drehbar auf dem Bolzen 13 gehalten, wobei zur Absicherung das in der Fahrdrahtklemme eingeführte Ende des Bolzens eine nicht dargestellte Ringnut enthält, in der ein Bügelsplint eingreift, mit dem so die Fahrdrahtklemme am Bolzen zusätzlich gesichert ist. Nachdem das durch Bolzen und Fahrdrahtklemme gebildete Drehgelenk nur bedingt zur Stromübertragung geeignet ist, ist zwischen der Schraubverbindung 12 der Fahrdrahtklemme 9 und dem Seitenhalter 7 eine Seilverbindung 34 vorgesehen, die das Drehgelenk überbrückt. Diese Seilverbindung ist so ausgeführt, daß sie einer möglichen Drehbewegung der Fahrdrahtklemme folgen kann, ohne daß andere Teile behindert werden.

Die Figur 4 zeigt eine Variante, bei der auf den Bolzen 13 eine Hülse 15 aufgepreßt ist, die am äußeren Umfang mehrere, durch Ausprägungen gebildete stromübertragende Elemente 16 aufweist (Fig. 5), die an der korrespondierenden Gegenfläche der Halbschalen der Fahrdrahtklemme 9 mit einer bestimmten, zur Stromübertragung erforderlichen Flächenpressung anliegen.

Alternativ kann auch eine glatte Hülse vorgesehen sein, die aus einem leitfähigen und gut gleitfähigen Material besteht. Ein solches Material kann beispielsweise ein mit Graphit durchsetzter Kohlenstoffwerkstoff (Hartkohle) sein.

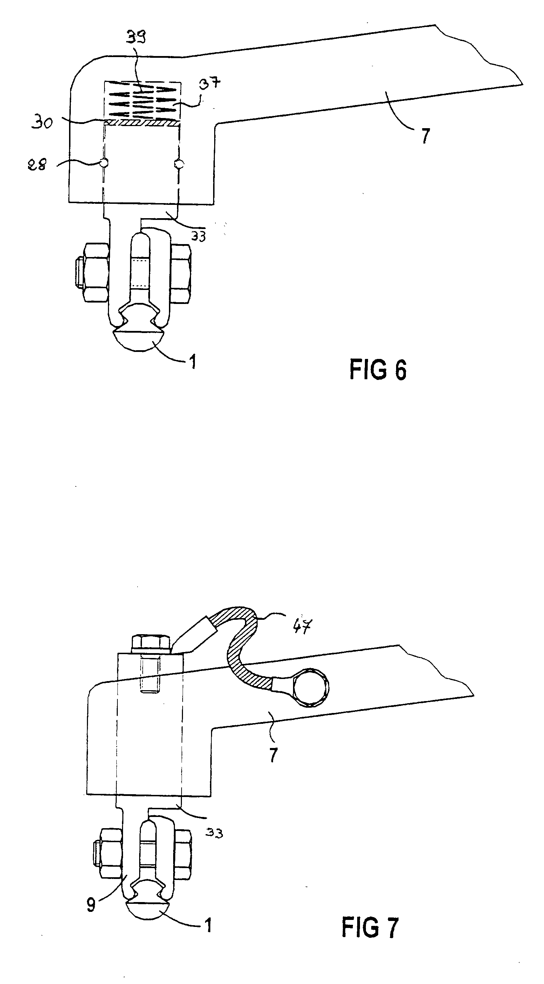

Die Stromübertragung kann mit Vorteil auch über stirnseitige Kontaktelemente erfolgen, wie dies am Ausführungsbeispiel nach Figur 6 gezeigt ist. Bei dieser Version ist der Bolzen 33 in einer Bohrung 37 des Seitenhalters 7 drehbar angeordnet und in bekannter Weise mittels eines Bügelsplints 28 gegen axiales Abgleiten gesichert. Die Stromübertragung erfolgt hier hauptsächlich an der Stirnfläche des Bolzens 33 über eine entsprechend dimensionierte Druckfeder 39, die an einer stirnseitig des Bolzens 13 anliegenden Kontaktplatte 30 anliegt.

Die Mantelfläche zwischen Zapfen 13 und der mit ihr zusammenwirkenden Fläche der Bohrung im Seitenhalter 7 dient bei dieser Ausführung lediglich zur Führung.

Bei der Version nach Figur 7 ist der im Seitenhalter 7 drehbeweglich gelagerte Bolzen 33 Bestandteil der Fahrdrahtklemme 9. Die elektrische Verbindung vom Fahrdraht zum Seitenhalter 7 wird durch eine elektrische leitende Überbrückung des Gelenks mittels einer entsprechend dimensionierten Seilverbindung 47 hergestellt.

## Patentansprüche

1. Oberleitungsanlage, die wenigstens eine Tragkonstruktion für mindestens ein Kettenwerk (1 bis 3) enthält, wobei die Tragkonstruktion wenigstens einen Ausleger (4 bis 7) aufweist und wobei das Kettenwerk wenigstens einen im wesentlichen längs der Fahrtrichtung verlaufenden Fahrdraht (1) sowie ein Tragseil (2) und mehrere Hänger (3) umfaßt, wobei der Fahrdraht von wenigstens einer quer zum Fahrdraht angeordneten Schleifleiste eines Stromabnehmers beschliffen wird, **dadurch gekennzeichnet, daß** die Betriebsströme und Kurzschlußströme über die Tragkonstruktion (4 bis 7) geführt werden.

2. Oberleitungsanlage nach Anspruch 1, **dadurch gekennzeichnet, daß** die Tragkonstruktion (4 bis 7) zumindest teilweise aus elektrisch leitfähigen Bauteilen besteht.

3. Oberleitungsanlage nach Anspruch 1, **dadurch gekennzeichnet, daß** an der Tragkonstruktion (4 bis 7) elektrisch leitfähige Bauteile zur Verbindung elektrischer Leiter angeordnet sind.

4. Oberleitungsanlage nach Anspruch 1, **dadurch gekennzeichnet, daß** die Tragkonstruktion (4 bis 7) aus Einzelelementen besteht, die zumindest teilweise durch Gelenke miteinander verbunden sind, wobei die Gelenke stromführend ausgebildet sind.

5. Oberleitungsanlage nach Anspruch 1, **dadurch gekennzeichnet, daß** die Tragkonstruktion (4 bis 7) aus Einzelelementen besteht, die zumindest teilweise durch Gelenke miteinander verbunden sind, wobei die Gelenke durch elektrische Leiter (14, 17) überbrückt sind.

6. Oberleitungsanlage nach Anspruch 1, **dadurch gekennzeichnet, daß** die Tragkonstruktion (4 bis 7) wenigstens einen Seitenhalter (7) umfaßt, an dem über ein Drehgelenk eine Fahrdrahtklemme (9) gehalten ist, wobei eine stromfeste Verbindung erzielt wird, indem zwischen Fahrdrahtklemme (9) und Seitenhalter (7) ein das Drehgelenk überbrückendes Element (14, 17) angeordnet ist und/oder indem das Drehgelenk selbst stromfest ausgeführt ist.

7. Oberleitungsanlage nach Anspruch 6, **dadurch gekennzeichnet, daß** eine Fahrdrahtklemme (9) vorgesehen ist, an der ein stromtragfähiger Bolzen (13) befestigt ist, welcher mittels des Drehgelenks drehbar am Seitenhalter (7) gehaltert ist.

8. Oberleitungsanlage nach Anspruch 6, **dadurch gekennzeichnet, daß** das Drehgelenk aus einem Bolzen (13) und einer mit diesem zusammenwirkenden, stromfesten Hülse (15) gebildet ist.

9. Oberleitungsanlage nach Anspruch 8, **dadurch gekennzeichnet, daß** die Hülse (15) mit mehreren am Umfang angeordneten Ausprägungen (16) versehen ist, die mit einer zur Stromübertragung erfoderlichen Flächenpressung an der korrespondierenden Gegenfläche des Drehgelenks anliegen.

10. Vorrichtung nach Anspruch 6, **dadurch gekennzeichnet, daß** das Drehgelenk durch einen in einer Bohrung (37) geführten Bolzen (33) gebildet ist und die Stromübertragung stirnseitig des Bolzens erfolgt, indem zwischen der Stirnfläche des Bolzens und der mit ihr korrespondierenden Fläche der Bohrung (37) stromübertragende Mittel (39, 30) kraftschlüssig angeordnet sind.

11. Oberleitungsanlage nach Anspruch 2 oder 3, **dadurch gekennzeichnet, daß** die Tragkonstruktion (4 bis 7) über eine elektrisch leitende Verbindung mit einer zusätzlichen Leitung zur Energieversorgung verbunden ist.

12. Oberleitungsanlage nach Anspruch 1, **dadurch gekennzeichnet, daß** die Tragkonstruktion (4 bis 7) im Überlappungsbereich von nacheinander geschalteten Oberleitungsabschnitten so ausgelegt ist, daß über sie die Betriebsströme und Kurzschlußströme der miteinander verbundenen Oberleitungsabschnitte leitbar sind.

## Claims

1. Overhead contact system, which comprises at least one supporting structure for at least one catenary (1 to 3), wherein the supporting structure comprises at least one bracket (4 to 7) and wherein the catenary comprises at least one contact wire (1) extending substantially in the direction of travel as well as a carrier cable (2) and a plurality of droppers (3), wherein the contact wire is contacted by at least one sliding-contact strip of a current collector disposed at right angles to the contact wire, **characterized in that** the operating currents and short-circuit currents are carried via the supporting structure (4 to 7).

2. Overhead contact system according to claim 1, **characterized in that** the supporting structure (4 to 7) at least partially comprises electrically conductive components.

3. Overhead contact system according to claim 1, **characterized in that** disposed on the supporting structure (4 to 7) are electrically conductive components for the connection of electric conductors.

4. Overhead contact system according to claim 1, **characterized in that** the supporting structure (4 to 7) comprises individual elements, which are at least partially connected to one another by joints, wherein the joints are of a current-carrying design.

5. Overhead contact system according to claim 1, **characterized in that** the supporting structure (4 to 7) comprises individual elements, which are at least partially connected to one another by joints, wherein the joints are bridged by electric conductors (14, 17).

6. Overhead contact system according to claim 1, **characterized in that** the supporting structure (4 to 7) comprises at least one steady brace (7), on which a feeder ear (9) is supported via a swivel joint, wherein a connection with a current-carrying capacity is achieved **in that** an element (14, 17), which bridges the swivel joint, is disposed between feeder ear (9) and steady brace (7) and/or **in that** the swivel joint itself is designed with a current-carrying capacity.

7. Overhead contact system according to claim 6, **characterized in that** a feeder ear (9) is provided, to which a bolt (13) with a current-carrying capacity is fastened, which is held by means of the swivel joint rotatably on the steady brace (7).

8. Overhead contact system according to claim 6, **characterized in that** the swivel joint is formed by a bolt (13) and a sleeve (15) with a current-carrying capacity, which cooperates with said bolt.

9. Overhead contact system according to claim 8, **characterized in that** the sleeve (15) is provided with a plurality of outwardly embossed portions (16), which are disposed on the periphery and are applied against the corresponding counterpart surface of the swivel joint with a surface pressure needed for the transfer of current.

10. Apparatus according to claim 6, **characterized in that** the swivel joint is formed by a bolt (33) guided in a bore (37) and the transfer of current is effected at the end of the bolt **in that** current transfer means (39, 30) are disposed in a friction-locked manner between the end face of the bolt and the surface of the bore (37) corresponding therewith.

11. Overhead contact system according to claim 2 or 3, **characterized in that** the supporting structure (4 to 7) is connected by an electrically conducting connection to an additional power supply line.

12. Overhead contact system according to claim 1, **characterized in that** the supporting structure (4 to 7) in the region of overlap of successively connected overhead line sections is designed so as to be capable of conducting the operating currents and short-circuit currents of the mutually connected overhead line sections.

## Revendications

1. Installation électrique aérienne, qui comprend au moins une structure porteuse pour au moins une caténaire (1 à 3), la structure porteuse comportant au moins une console (4 à 7) et la caténaire comprenant au moins un fil (1) de contact s'étendant essentiellement le long de la direction de marche ainsi qu'un câble (2) porteur et plusieurs pendules (3), au moins un frotteur, disposé transversalement au fil de contact, d'un pantographe venant frotter sur le fil de contact, **caractérisée en ce que** les courants de service et les courants de court-circuit passent par la structure (4 à 7) porteuse.

2. Installation électrique aérienne suivant la revendication 1, **caractérisée en ce que** la structure (4 à 7) porteuse est constituée au moins pour partie d'éléments électriquement conducteurs.

3. Installation électrique aérienne suivant la revendication 1, **caractérisée en ce que** des éléments électriquement conducteurs sont disposés sur la structure (4 à 7) porteuse pour relier des conducteurs électriques.

4. Installation électrique aérienne suivant la revendication 1, **caractérisée en ce que** la structure (4 à 7) porteuse est constituée d'éléments individuels qui sont reliés entre eux au moins pour partie par des articulations, les articulations étant réalisées conductrices du courant électrique.

5. Installation électrique aérienne suivant la revendication 1, **caractérisée en ce que** la structure (4 à 7) porteuse est constituée d'éléments individuels qui sont reliés entre eux au moins pour partie par des articulations, les articulations étant shuntées par des conducteurs (14, 17) électriques.

6. Installation électrique aérienne suivant la revendication 1, **caractérisée en ce que** la structure (4 à 7) porteuse comprend au moins un antibalançant (7) sur lequel une pince (9) de fil de contact est maintenue au moyen d'une articulation tournante, une liaison capable de supporter les courants électriques étant obtenue par le fait qu'un élément (14, 17) shuntant l'articulation tournante est disposé entre la pince (9) de fil de contact et l'antibalançant (7), et/ou par le fait que l'articulation tournante elle-même est réalisée en étant capable de supporter les courants électriques.

7. Installation électrique aérienne suivant la revendication 6, **caractérisée en ce qu'**il est prévu une pince (9) de fil de contact sur laquelle est fixé un axe (13) capable de supporter les courants électriques qui, au moyen de l'articulation tournante, est maintenu à rotation sur l'antibalançant (7).

8. Installation électrique aérienne suivant la revendication 6, **caractérisée en ce que** l'articulation tournante est constituée d'un axe (13) et d'une douille (15) capable de supporter les courants électriques, coopérant avec cet axe.

9. Installation électrique aérienne suivant la revendication 8, **caractérisée en ce que** la douille (15) est pourvue de plusieurs reliefs (16) disposés sur son pourtour, qui s'appliquent avec une pression superficielle nécessaire pour la transmission de courant sur la contre-surface correspondante de l'articulation tournante.

10. Dispositif suivant la revendication 6, **caractérisé en ce que** l'articulation tournante est formée par un axe (33) guidé dans un perçage (37) et la transmission du courant s'effectue sur le côté frontal de l'axe par le fait que des moyens (39, 30) transmetteurs de courant sont disposés à force entre la face frontale de l'axe et la face correspondante du perçage (37).

11. Installation électrique aérienne suivant la revendication 2 ou 3, **caractérisée en ce que** la structure (4 à 7) porteuse est reliée par l'intermédiaire d'une liaison électriquement conductrice à une ligne supplémentaire d'alimentation en énergie.

12. Installation électrique aérienne suivant la revendication 1, **caractérisée en ce que** la structure (4 à 7) porteuse est, dans la région de chevauchement de tronçons de ligne aérienne reliés en succession, conçue de telle sorte qu'elle permet de conduire les courants de service et les courants de court-circuit des tronçons de ligne aérienne mutuellement reliés.
